# EUROPÄISCHE PATENTSCHRIFT

(11) **EP 3 251 980 B1**
(45) Veröffentlichungstag und Bekanntmachung des Hinweises auf die Patenterteilung: **30.12.2020**
(21) Anmeldenummer: 16172596.5
(22) Anmeldetag: 02.06.2016
(51) Int. Cl.: B65G 1/137

(54) **KOMMISSIONIERAUTOMAT MIT EINER VORRICHTUNG ZUM BEFÜLLEN EINER REIHE VON TRANSPORTBEHÄLTERN MIT JEWEILS EINER EINEM AUFTRAG ENTSPRECHENDEN GRUPPE VON ARZNEIMITTELPACKUNGEN**
PICKING SYSTEM WITH A DEVICE FOR FILLING A SERIES OF TRANSPORT CONTAINERS EACH WITH A GROUP OF PACKETS OF MEDICINE CORRESPONDING TO AN ORDER
AUTOMATE DE PRÉPARATION DE COMMANDES AVEC UN DISPOSITIF POUR LE REMPLISSAGE D'UNE SÉRIE DE RÉCIPIENTS DE TRANSPORT AVEC CHACUN UN GROUPE D'EMBALLAGES DE MÉDICAMENTS CORRESPONDANT À UNE COMMANDE

(43) Veröffentlichungstag der Anmeldung: 06.12.2017
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 2 769 935
- EP-A2- 0 705 775
- EP-A2- 1 820 754
- EP-B1- 2 719 641
- WO-A2-99/18014
- DE-T2- 68 928 331
- DE-U1-202006 002 506
- JP-A- S49 108 774

## Beschreibung

Die Erfindung betrifft einen Arzneimittel-Kommissionierautomat mit wenigstens einem Lagerregal, wenigstens einem sich in einer Gasse vor dem Regal bewegenden Regalbediengerät zum Einlagern von Arzneimittelpackungen in Lagerplätze auf Lagerflächen des Lagerregals und zum Entnehmen dieser Arzneimittelpackungen von den Lagerflächen, einer Steuervorrichtung zur Steuerung des Regalbediengeräts, und einer Füllvorrichtung zum sukzessiven Befüllen einer Vielzahl von Transportbehältern mit jeweils einer einem Auftrag entsprechenden Gruppe mehrerer Arzneimittelpackungen.

Ein derartiger Kommissionierautomat ist beispielsweise aus der EP 2 719 641 B1 bekannt. EP 2 719 641 B1 offenbart einen Arzneimittel-Kommissionierautomat nach dem Oberbegriff des Anspruchs 1. Der bekannte Kommissionierautomat weist beispielsweise vier parallel angeordnete Reihen von Lagerregalen mit Lagerflächen auf horizontal angeordneten Regalböden auf, wobei zwischen der ersten und zweiten Lagerregalreihe und der dritten und vierten Lagerregalreihe jeweils eine Gasse gebildet ist, in der jeweils mehrere Regalbediengeräte zum Einlagern von Arzneimittelpackungen in Lagerplätze auf den Regalböden der Lagerregale und zum Entnehmen dieser Arzneimittelpackungen von den Regalböden verfahrbar sind. Zwischen der zweiten und der dritten Lagerregalreihe sind mehrere übereinander angeordnete, sich über die gesamte Lände der Regalreihen erstreckende Förderbänder angeordnet. In der zweiten und der dritten Lagerregalreihe sind - verteilt über deren Länge - mehrere Durchreichfenster und Rutschen derart angeordnet, dass die in den Gassen bewegten Regalbediengeräte aufgenommene Arzneimittelpackungen durch die Fenster auf die Rutschen abwerfen können, so dass die abgeworfenen Arzneimittelpackungen dann auf jeweils eines der Förderbänder gelangen. Die Förderbänder transportieren die aufgenommenen Arzneimittelpackungen zu einer Stirnseite der vier Regalreihen und weiter zu einer davor angeordneten Abgabevorrichtung mit mehreren Rutschen, die dafür sorgt, dass die auf den Förderbändern eintreffenden Arzneimittelpackungen in einen an einem Füllort angeordneten Transportbehälter (dort Aufnahmebehälter genannt) fallen. An vorgegebenen Orten entlang der Förderbänder und vor deren Ende an der Abgabevorrichtung sind Sperrvorrichtungen angeordnet, die eine Weiterbewegung der auf dem bewegten Förderband eintreffenden Arzneimittelpackungen verhindern, so dass sich Gruppen von Arzneimittelpackungen hinter diesen Sperrvorrichtungen ansammeln, d.h. aufstauen. Wenn sich in der Gruppe sämtliche Arzneimittelpackungen eines vorgegebenen Auftrags angesammelt haben und an der Abgabevorrichtung ein Transportbehälter zur Aufnahme dieser Gruppe bereitsteht, so gibt eine Steuereinrichtung die Sperrvorrichtung frei, so dass die Gruppe zum richtigen Zeitpunkt weitertransportiert wird und schließlich in dem richtigen Transportbehälter landet. Nachteilig bei diesem bekannten Kommissionierautomaten ist die aufwändige Ausgestaltung und komplizierte Steuerung der Transport- und Sperrvorrichtungen. Insbesondere die Sperrvorrichtungen, die einen Strom von eintreffenden Arzneimittelpackungen auf einem darunter weiterlaufenden Förderband aufhalten, sind aufwändig und wartungsintensiv, sofern ein Verklemmen aufgestauter Arzneimittelpackungen sicher vermieden werden soll.

Aus der DE 689 28 331 T2 ist ebenfalls ein Kommissionierautomat bekannt. Dieser umfasst neben den vorgenannten Bauelementen erste und eine zweite Transportvorrichtung(en) zum Transportieren und Zwischenlagern von Kleinstückgütern. Die zweite Transporteinrichtung ist in der Form einer Wendelrutsche mit unten angeordneter Sperre ausgebildet, was den Kommissionierautomaten insgesamt bauliche aufwendig macht.

Aufgabe der Erfindung ist es daher, eine einfachere, robuste, baulich einfache Möglichkeit zu schaffen, bei einem Kommissionierautomaten der eingangs genannten Art eine Vielzahl von Transportbehältern mit jeweils einer einem Auftrag entsprechenden Gruppe mehrerer Arzneimittelpackungen sukzessive zu füllen.

Diese Aufgabe wird erfindungsgemäß durch einen Arzneimittel-Kommissionierautomat mit den Merkmalen des Anspruchs 1 gelöst.

Der erfindungsgemäße Arzneimittel-Kommissionierautomat umfasst wenigstens ein Lagerregal und wenigstens ein sich in einer Gasse vor dem Regal bewegendes Regalbediengerät zum Einlagern von Arzneimittelpackungen in Lagerplätze auf Lagerflächen des Lagerregals und zum Entnehmen dieser Arzneimittelpackungen von den Lagerflächen. Unter einem "Lagerregal" soll hier nicht nur ein feststehendes Regal mit mehreren übereinander angeordneten horizontalen Regalböden verstanden werden, sondern beispielsweise auch ein feststehendes Regal mit Lagerschächten auf geneigten Regalböden, ein feststehendes Regal mit übereinander angeordneten, aus dem Regal herausfahrbaren Schubläden oder auch ein bewegbares Schubregal mit Lagerschächten oder Einzellagerplätzen. Bei Verwendung verfahrbarer Regale kann die Gasse von variabler Anordnung und Abmessung sein. Vorzugsweise sind zwei Lagerregalreihen parallel angeordnet, so dass zwischen jeweils zwei Lagerregalen eine Gasse gebildet wird. Vorzugsweise weisen die Lagerregale ebene, horizontale Regalböden auf, auf denen die Arzneimittelpackungen vorzugsweise in - in Regallängsrichtung - nebeneinander angeordneten virtuellen Kanälen gelagert sind. Das Regalbediengerät weist vorzugsweise eine Ablagefläche zum Aufnehmen einer oder mehrerer Arzneimittelpackungen und eine Greifvorrichtung zum Bewegen der Arzneimittelpackungen von der Ablagefläche auf einen Regalboden oder von einem Regalboden auf die Ablagefläche auf. Der erfindungsgemäße Arzneimittel-Kommissionierautomat umfasst ferner eine Steuervorrichtung zur Steuerung des Regalbediengeräts und eine Füllvorrichtung zum sukzessiven Befüllen einer Vielzahl von Transportbehältern mit jeweils einer einem Auftrag entsprechenden Gruppe mehrerer Arzneimittelpackungen. Die Transportbehälter sind vorzugsweise oben offene Kisten.

Die Füllvorrichtung weist mehrere ortsfest angeordnete Sammelbehälter mit jeweils einer bodenseitigen Öffnung auf, wobei die Sammelbehälter jeweils eine einem Auftrag entsprechende Gruppe mehrerer Arzneimittelpackungen aufnehmen können und eine Entladevorrichtung aufweisen, mit deren Hilfe sämtliche in dem Sammelbehälter angesammelte Arzneimittelpackungen gleichzeitig entladen werden können, wobei die Entladevorrichtungen jeweils eine Verschlussvorrichtung zum Verschließen und Freigeben der bodenseitigen Öffnung aufweisen.

Die Füllvorrichtung enthält außerdem erste Transportvorrichtungen mit jeweils einem in die Gasse in den Zugriffsbereich des wenigstens einen Regalbediengeräts hineinreichenden Transportkanal, in den das Regalbediengerät Arzneimittelpackungen abgeben kann und der die Arzneimittelpackungen in einen zugehörigen Sammelbehälter weiterleitet, wobei jedem Sammelbehälter eine erste Transportvorrichtung zugeordnet ist, sowie zumindest eine zweite Transportvorrichtung zum Aufnehmen der entladenen angesammelten Arzneimittelpackungen der Gruppe aus jeweils einem Sammelbehälter und zum Weiterleiten der entladenen Arzneimittelpackungen der Gruppe in den am Füllort positionierten Transportbehälter vorgesehen ist. Die Füllvorrichtung weist ferner eine Vorrichtung zur Aufnahme eines zu füllenden Transportbehälters an einem Füllort der Füllvorrichtung auf, wobei der zu füllende Transportbehälter an dem Füllort derart angeordnet ist, dass die mittels der Entladevorrichtung entladenen Arzneimittelpackungen in den Transportbehälter geleitet werden.

Erfindungsgemäß ist es vorgesehen, dass die wenigstens eine zweite Transportvorrichtung einen trichterartigen Führungskanal mit einer oberen und einer unteren Öffnung umfasst, wobei die obere Öffnung unterhalb der bodenseitigen Öffnungen aller Sammelbehälter und die untere Öffnung über einem am Füllort positionierten, oben offenen Transportbehälter angeordnet ist.

Der erfindungsgemäße Arzneimittel-Kommissionierautomat gestattet mit konstruktiv einfachen und zuverlässigen Mittel ein Ansammeln von jeweils einem Auftrag entsprechenden Gruppen mehrerer Arzneimittelpackungen in den Sammelbehältern und einen schnellen Weitertransport der Gruppe in den gewünschten Transportbehälter, sobald dieser am Füllort bereitsteht. Der trichterartiger Führungskanal vereinfacht die Konstruktion für den hier vorliegenden Fall, dass zu einem gegebenen Zeitpunkt jeweils nur ein Sammelbehälter in einen am Füllort angeordneten Transportbehälter entleert werden soll.

Bei einer bevorzugten Ausführungsform umfassen die Verschlussvorrichtungen zum Verschließen und Freigeben der bodenseitigen Öffnung jeweils einen Schieberollladen. Diese können durch einen elektrischen Antrieb angesteuert werden. Vorzugsweise werden jedoch pneumatische Antriebe verwendet, die ein schnelleres Öffnen der Schieberolladen bei einem relativ großen Stellweg gestatten.

Bei einer Weiterbildung kann der trichterartige Führungskanal der zweiten Transportvorrichtung eine Sperrvorrichtung derart aufweisen, dass die aus einem Sammelbehälter in den Führungskanal entladenen Arzneimittelpackungen einer Gruppe stromauf der Sperrvorrichtung zwischengespeichert und nach einer Freigabe der Sperrvorrichtung weitergeleitet werden können. So kann der aus dem Sammelbehälter entladene Inhalt solange zwischengepuffert werden, bis der Transportbehälter am Füllort aufnahmebereit ist. Außerdem ermöglicht diese Ausführungsform beispielsweise ein Zwischenpuffern eines Sammelbehälterinhalts, so dass derselbe Sammelbehälter bereits wieder beladen werden kann, bevor der zuvor gesammelte Inhalt in den Transportbehälter übergeben wurde. Hierbei umfasst die Sperrvorrichtung vorzugsweise einen Schiebe- oder Rollladen zum Verschließen und Freigeben der unteren Öffnung des Führungskanals.

Bei einer bevorzugten Ausführungsform sind die Sammelbehälter oben offene Bunker. Dies erlaubt das Zuführen der anzusammelnden Arzneimittelpackungen sowohl über Förderbänder als auch über einfache Rutschen, deren Abgabeenden oberhalb des oben offenen Bunkers angeordnet werden, wobei auch mehrere Bänder und/oder Rutschen zu der Oberseite eines Bunkers geführt werden können. Vorzugsweise ist hierbei der Transportkanal jeder der ersten Transportvorrichtungen von einer Rutsche gebildet, auf der die an einem oberen Ende der Rutsche von dem Regalbediengerät abgelegten Arzneimittelpackungen schwerkraftgetrieben in den zugehörigen Sammelbehälter rutschen. Dies erlaubt eine einfache und zuverlässige Gestaltung. Vorzugsweise sind die als Transportkanäle dienenden Rutschen parallel über- und/oder nebeneinander angeordnet.

Bei einer bevorzugten Ausführungsform sind Lagerregale parallel zu beiden Längsseiten der Gasse angeordnet, und die oberen Enden der Rutschen der ersten Transportvorrichtungen sind an einer Stirnseite der Gasse angeordnet. Die Sammelbehälter sind jenseits der Gasse vor einer an der Stirnseite der Gasse angeordneten Stirnwand angeordnet.

Eine bevorzugte Weiterbildung dieser Ausführungsform ist dadurch gekennzeichnet, dass zwischen den Lagerflächen eines oder beider parallel zur Gasse angeordneten Lagerregale und/oder neben den Lagerregalen auf ihrer der Gasse gegenüberliegenden Seite wenigstens ein mit der Steuervorrichtung gekoppeltes Transportband angeordnet ist, wobei das Transportband aufliegende Arzneimittelpackungen über die Stirnwand hinaus transportiert, dass ein oder mehrere Rutschen mit jeweils einem oberen und einem unteren Ende vorgesehen sind, wobei die oberen Enden derart in den Zugriffsbereich des Regalbediengeräts reichen, dass das Regalbediengerät Arzneimittelpackungen in die Rutschen ablegen kann, und wobei die unteren Enden über dem Transportband angeordnet sind, und dass mit der Steuervorrichtung gekoppelte dritte Transportvorrichtungen vorgesehen sind, die Arzneimittelpackungen von dem wenigstens einen Transportband aufnehmen und in einen von der Steuervorrichtung ausgewählten Sammelbehälter transportieren können. Dies schafft einen oder mehrere zusätzliche Transportwege neben den ersten Transportvorrichtungen und ermöglicht - bei angepasster Lagerorganisation und entsprechender Steuerung der Auslagerungsreihenfolge - eine Verringerung der Fahrwege des Regalbediengeräts und somit ein schnelleres Befüllen der Sammelbehälter. Diese Ausführungsform ist insbesondere bei einem Kommissionierautomaten vorteilhaft, der zwei oder mehr in einer Gasse bewegte Regalbediengeräte aufweist.

Bei einer bevorzugten Ausführungsform ist die Vorrichtung zur Aufnahme eines zu füllenden Transportbehälters an dem Füllort der Füllvorrichtung Teil einer Vorrichtung zum sukzessiven Zuführen der zu füllenden Transportbehälter zu dem Füllort der Füllvorrichtung. Dies ermöglicht eine Automatisierung der Zufuhr der zu füllenden Transportbehälter, insbesondere eine Steuerung der Zufuhr durch die Steuervorrichtung des Kommissionierautomaten.

Bei einer bevorzugten Ausführungsform des erfindungsgemäßen Arzneimittel-Kommissionierautomaten sind zwei bis sechs, Sammelbehälter vorgesehen und benachbart zueinander angeordnet. Diese Anzahl von Sammelbehältern stellt ein Optimum zwischen ausreichender Pufferkapazität und baulichem und steuerungstechnischem Aufwand dar. Vorzugsweise sind zwei oder vier Sammelbehälter vorgesehen, die paarweise benachbart zueinander angeordnet sind.

Im Folgenden wird die Erfindung anhand eines in den Zeichnungen dargestellten bevorzugten Ausführungsbeispiels näher beschrieben. In den Zeichnungen zeigen:
Figur 1 eine schematische Seitenansicht eines bevorzugten Ausführungsbeispiels des erfindungsgemäßen Arzneimittel-Kommissionierautomaten und
Figur 2 eine schematische Frontansicht des in Figur 1 gezeigten Arzneimittel-Kommissionierautomaten.

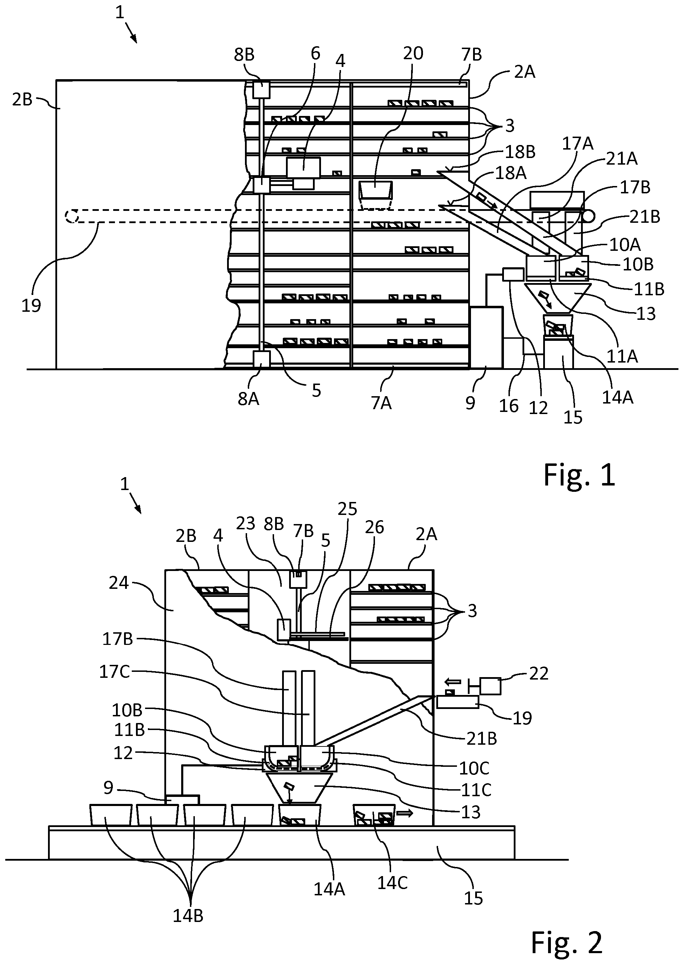

Figuren 1 und 2 zeigen eine schematische Seitenansicht beziehungsweise Frontansicht eines bevorzugten Ausführungsbeispiels des erfindungsgemäßen Arzneimittel-Kommissionierautomaten 1, der zwei parallele Reihen von Lagerregalen 2A, 2B aufweist, zwischen denen eine Gasse 23 gebildet ist. In Figur 1 die Regalreihe 2B teilweise weggeschnitten dargestellt, um den Blick in die Gasse 23 und auf die Innenseite der hinteren Regalreihe 2A freizugeben. Die Regale der Regalreihen 2A und 2B weisen horizontale, ebene Regalböden 3 auf, auf denen unterschiedlich große Arzneimittelpackungen mit unterschiedlichen Inhalten chaotisch gelagert sind, wobei die Packungen in nebeneinander und beabstandet angeordneten virtuellen Kanälen hintereinander angeordnet sind.

In der Gasse 23 bewegt sich ein Regalbediengerät 4. Bei anderen Ausführungsbeispielen können auch mehrere Regalbediengeräte in der Gasse 23 verfahrbar sein. Das Regalbediengerät 4 ist mit einer Halterung 6 an einer vertikalen Schiene 5 befestigt, wobei die Halterung 6 einen Antrieb zum vertikalen Bewegen des Regalbediengeräts 4 aufweist. Die vertikale Schiene 5 wiederum ist mittels einer unteren Führung 8A und einer oberen Führung 8B an einer unteren Schiene 7A beziehungsweise einer oberen Schiene 7B geführt. So kann das Regalbediengerät 4 in der Gasse 23 vertikal und horizontal vor den Frontseiten der sich gegenüberstehenden Regalreihen 2A und 2B verfahren werden. Das Regalbediengerät 4 weist eine Greifvorrichtung 25, vorzugsweise einen mit einem Schieber oder einem Sauggreifer kombinierten Backengreifer, und einen Auflagetisch 26 auf. Mit Hilfe von Greifbacken der Greifvorrichtung 25 oder mit Hilfe des Schiebers oder Sauggreifers und geführt durch die Greifbacken der Greifvorrichtung 25 können auf dem Auflagetisch 26 aufliegende Arzneimittelpackungen auf einen der ebenen Regalböden 3 geschoben werden, sofern der Auflagetisch 26 vor diesem Regalboden 3 positioniert ist. Umgekehrt können auf den Regalböden 3 aufliegende Arzneimittelpackungen mit Hilfe von Greifbacken oder mit Hilfe eines Sauggreifers der Greifvorrichtung 25 ergriffen und auf den Auflagetisch 26 des Regalbediengeräts 4 gezogen werden.

Das Regalbediengerät 4 ist so ausgebildet, dass der Auflagetisch 26 mit den darüber angeordneten Greifbacken der Greifvorrichtung 25 um einen vertikale Achse derart gedreht werden kann, dass die Greifvorrichtung 25 auf beide Regalreihen 2A und 2B zugreifen kann. Der Auflagetisch 26 und die Greifvorrichtung 25 des Regalbediengeräts 4 können nicht nur um 180° zum Zugreifen auf die einander gegenüber liegenden Regalreihen 2A und 2B gedreht werden, sondern darüber hinaus auch um 90°, so dass das Regalbediengerät 4 auch auf die Stirnseiten der Gasse 23 zugreifen kann.

An einer Stirnseite der Gasse 23, welche die in Figur 2 dargestellte Frontseite bildet, befindet sich eine Stirnwand 24, die in Figur 2 teilweise weggeschnitten dargestellt ist, um den Blick auf die dahinter angeordneten Regalreihen 2A, 2B und die Gasse 23 mit dem Regalbediengerät 4 freizugeben.

Das Regalbediengerät 4 ist mit einer Steuereinrichtung 9 gekoppelt, wobei die Steuersignale sowie die Spannungsversorgung des Regalbediengeräts 4 üblicherweise entlang der bodenseitigen Schiene 7A und dann vertikal entlang der vertikalen Schiene 5 zu dem Bediengerät 4 geführt werden. Die Steuervorrichtung 9 umfasst vorzugsweise einen Computer mit Prozessor und Speichereinrichtungen und üblichen Eingabe- und Ausgabeeinrichtungen für einen Benutzer, beispielsweise mit einer Tastatur, einem Bildschirm und einem Barcode-Scanner. Diese Peripherieeinrichtungen des Computers der Steuervorrichtung 9 sind in den schematischen Darstellungen der Figuren 1 und 2 nicht gezeigt.

Ebenfalls nicht in den Figuren 1 und 2 dargestellt sind Vorrichtungen, mit deren Hilfe neu einzulagernde Arzneimittelpackungen dem Arzneimittel-Kommissionierautomaten 1 zugeführt werden. Diese umfassen beispielsweise ein Einlagerungsförderband, das sich beispielsweise zwischen zwei Regalböden 3 einer der beiden Regalreihen 2A oder 2B über die gesamte Länge der Regalreihe erstreckt und an einer der beiden Stirnseiten nach außen heraustritt. Auf dem nach außen tretenden Abschnitt des Einlagerungsförderbands befindet sich eine Auflagestation, an der ein Bediener eine einzulagernde Arzneimittelpackung scannt, um diese zu identifizieren, und dann in vorgegebener Orientierung auf das Einlagerungsförderband auflegt. Bei alternativen Ausführungsformen des Arzneimittel-Kommissionierautomaten 1 können Vorrichtungen zum vollautomatischen Einlagern einer größeren Menge unterschiedlicher Arzneimittelpackungen vorgesehen sein, die beispielsweise eine gesamte Lieferung des Großhandels in einem Aufnahmebunker aufnehmen und dann die Arzneimittelpackungen automatisch vereinzeln, scannen (identifizieren) und einer Ablage im Zugriffsbereich des Regalbediengeräts 4 zuführen, so dass das Regalbediengerät 4 die neue einzulagernden Packungen an einen geeigneten Lagerort auf den Regalböden 3 bringen kann.

Der in den Figuren 1 und 2 schematisch dargestellte Kommissionierautomat 1 dient unter anderem dazu, Transportbehälter 14A, 14B, 14C sukzessive zu befüllen. Diese Transportbehälter nehmen beispielsweise eine einem Auftrag entsprechende Gruppe mehrerer Arzneimittelpackungen auf. Diese Aufträge umfassen üblicherweise jeweils eine größere Menge unterschiedlicher Arzneimittelpackungen, wie sie beispielsweise den Tagesbedarf einer Station in einem Krankenhaus decken. Die Transportbehälter 14A, 14B, 14C sind beispielsweise oben offene Kisten, die nach ihrem Befüllen auch mit einem geeigneten Deckel verschlossen werden können. Die Transportbehälter 14A, 14B, 14C werden mittels einer Transportvorrichtung 15 nacheinander einem Füllort zugeführt, an dem eine Füllvorrichtung des Kommissionierautomaten 1 für ein automatisches Befüllen des Transportbehälters 14A sorgt. Die Transportvorrichtung 15 umfasst beispielsweise Förderbänder und/oder Rollenförderer mit entsprechenden Antrieben, die von der Steuervorrichtung 9 des Kommissionierautomaten 1 gesteuert werden. Dies ist in Figur 1 durch die schematisch dargestellten Steuerleitungen 16 zwischen der Steuervorrichtung 9 und der Transportvorrichtung 15 veranschaulicht. In Figur 2 ist mit dem Bezugszeichen 14A derjenige Transportbehälter gekennzeichnet, der sich gerade an dem Füllort der Füllvorrichtung befindet. Der Transportbehälter 14C ist bereits gefüllt und wird in der Richtung des dargestellten Pfeils weiter transportiert. Auf der anderen Seite stehen noch zu befüllende Transportbehälter 14B auf der Transportvorrichtung 15 bereit.

Die in den Figuren 1 und 2 dargestellte Füllvorrichtung umfasst vier Sammelbehälter, von denen in Figur 1 die Sammelbehälter 10A und 10B und in Figur 2 die Sammelbehälter 10B und 10C zu sehen sind. Jeder Sammelbehälter 10A-C kann jeweils eine einem Auftrag entsprechende Gruppe mehrerer Arzneimittelpackungen aufnehmen. Jeder Sammelbehälter 10A-C weist eine Entladevorrichtung auf, mit deren Hilfe sämtliche in dem Sammelbehälter angesammelte Arzneimittelpackungen gleichzeitig entladen werden können. Die Sammelbehälter 10A-C weisen jeweils eine bodenseitige Öffnung auf, die durch eine Verschlussvorrichtung 11A-C verschlossen ist. In Figur 2 ist zu erkennen, dass die Verschlussvorrichtungen 11A-C jeweils einen Schiebeladen umfassen. Die Schiebeläden befinden sich in einer bogenförmigen Führung, die an die Bodenfläche und eine äußere Seitenwand des Sammelbehälters 10A-C angrenzt. Ein schematisch als Kasten dargestellter Antrieb 12 der vier Schiebeläden ist mit der Steuervorrichtung 9 gekoppelt. Der Antrieb 12 umfasst vorzugsweise vier hydraulische oder pneumatische Stellantriebe mit ihren zugehörigen Ansteuerschaltungen zur Ankopplung an die Steuervorrichtung 9. Die Steuervorrichtung 9 sorgt dafür, dass jeweils ein vollständig mit einer einem Auftrag entsprechenden Gruppe mehrerer Arzneimittelpackungen gefüllter Sammelbehälter 10A-C durch Verschieben des Schiebeladens und Freigabe der bodenseitigen Öffnung entleert wird, wobei die enthaltenen Packungen mit Hilfe einer trichterförmigen Führung 13 in einen unter der Führung 13 angeordneten oben offenen Transportbehälter 14A gelenkt werden. Nachdem ein Sammelbehälter 10A-C entleert worden ist, wird der mit dessen Inhalt gefüllte Transportbehälter 14A weiter transportiert und der nächste zu befüllende Transportbehälter 14B zu dem Füllort bewegt.

Die Sammelbehälter 10A-C stellen oben offene Bunker dar, denen die anzusammelnden Arzneimittelpackungen über erste Transportvorrichtungen zugeführt werden, wobei diese Transportvorrichtungen jeweils einen in die Gasse 23 hineinreichenden Transportkanal aufweisen, in den das Regalbediengerät 4 Arzneimittelpackungen abgeben kann und der die Arzneimittelpackungen zu einem zugehörigen Sammelbehälter 10A-C weiterleitet. Die Transportvorrichtungen der in den Figuren 1 und 2 dargestellten bevorzugten Ausführungsform sind geneigte Rutschen oder Schächte 17A-C. Diese geneigten Schächte führen von einer oben offenen Aufnahmeöffnung 18A-B innerhalb der Gasse 23 im Inneren des Kommissionierautomaten 1 durch eine Stirnwand 24 hindurch zu einem Abgabeort oberhalb des zugehörigen oben offenen Sammelbehälters 10A-C. Die Aufnahmeöffnungen 18A-B der Rutschen 17A-C sind in der Gasse so angeordnet, dass das Regalbediengerät 4 eine oder mehrere Packungen gleichzeitig in diese Aufnahmeöffnungen 18A-B abwerfen kann, so dass die Packungen anschließend in die Sammelbehälter 10A-C rutschen. Das Vorsehen jeweils einer Rutsche für jeden Sammelbehälter gestattet es der Steuerung des Regalbediengeräts, wechselweise Arzneimittelpackungen jedem der Sammelbehälter 10A-C zuzuführen. Die vier Sammelbehälter 10A-C brauchen hierbei nicht nacheinander gefüllt zu werden. Die Reihenfolge des Einfüllens der Arzneimittelpackungen in die Sammelbehälter 10A-C kann vielmehr in Abhängigkeit von dem jeweiligen Lagerort der Arzneimittelpackungen in den Regalen 2A, 2B und dem erforderlichen Fahrweg des Regalbediengeräts 4 so optimiert werden, dass die Transportwege minimiert werden. Dies sichert ein schnelles Befüllen der Sammelbehälter 10A-C.

Um eine weitere Optimierung der Transportwege zu erreichen, ist bei einer bevorzugten Ausführungsform, wie sie in den Figuren 1 und 2 dargestellt ist, ein Auslagerungsförderband 19 vorgesehen, das sich bei dem dargestellten Ausführungsbeispiel neben der Regalreihe 2A auf der der Gasse 23 abgewandten Seite erstreckt. Außerdem sind in der Außenwand der Regalreihe 2A Fenster 20 vorgesehen, an die sich eine zu dem Förderband 19 führende Rutsche anschließt. Das Regalbediengerät 4 kann aufgenommene Arzneimittelpackungen in diese Fenster 20 abwerfen, so dass diese über die Rutschen auf das Förderband 19 gelangen. In Figur 1 ist lediglich ein derartiges Fenster 20 dargestellt. Weitere Fenster können insbesondere an weiter von der Stirnwand 24 entfernten Orten vorgesehen sein. Die Fenster, welche an dem der Stirnwand 24 entgegengesetzten Ende des Lagerregals 2A vorgesehen sein können, gestatten es, dass das Regalbediengerät 4 Packungen, die an einer von der Stirnwand 24 entfernten Position gelagert sind, auf das Förderband 19 ablegt, so dass diese Packungen von dem Förderband 19 zu der Stirnseite, an der sich die Füllvorrichtung befindet, bereits transportiert werden können, während das Regalbediengerät 4 weitere Arzneimittelpackungen von den Regalböden 3 entnimmt und beispielsweise zu den Aufnahmeöffnungen 18A, B transportiert. Auf dem Förderband 19 gelangen die Arzneimittelpackungen zu der Stirnseite, an der sich die Füllvorrichtung befindet. Dort ist das Förderband 19 über die Stirnwand 24 hinaus neben die Füllvorrichtung geführt. An dem vorderen Ende des Förderbands 19 befinden sich Rutschen 21A und 21B, die zu Sammelbehältern 10A-C führen. Ferner ist eine mit der Steuervorrichtung 9 gekoppelte Schiebevorrichtung 22 vorgesehen, die die auf dem Förderband 19 eintreffenden Arzneimittelpackungen von dem Förderband 19 in die Rutschen 21A und 21B schiebt, so dass diese weiter in die Sammelbehälter 10A-C transportiert werden. In der schematischen Darstellung der Figuren 1 und 2 sind lediglich zwei Rutschen 21A und 21B dargestellt, die in die (von der Stirnseite betrachtet) rechts angeordneten Sammelbehälter führen. Selbstverständlich können auch vier Rutschen vorgesehen sein, die jeweils einem der vier Sammelbehälter 10A-C zugeordnet sind.

Im Rahmen des Erfindungsgedankens sind zahlreiche alternative Ausführungsformen denkbar. Beispielsweise kann der Arzneimittel-Kommissionierautomat 1 anstelle der ebenen, horizontalen Regalböden 3 oder zusätzlich zu diesen auch geneigte Regalböden mit Lagerschächten aufweisen. Das Regalbediengerät 4 kann entsprechend an die Entnahme von Arzneimittelpackungen aus geneigten Schächten angepasst sein, beispielsweise ebenfalls geneigte Pufferschächte aufweisen. Die sich beidseitig einer Gasse erstreckenden Lagerregale brauchen keine ebene Frontseite zu haben; sie können sich auch bogenförmig oder abgewinkelt im Raum erstrecken. In diesem Fall wird auch das Regalbediengerät 4 entlang der gekrümmten bzw. abgewinkelten Gasse 23 geführt. In einer Gasse 23 können auch zwei oder mehr Regalbediengeräte 4 geführt sein, wobei diese entweder separate oder gemeinsame Führungsschienen 7A, 7B verwenden können. Die in Figur 1 und 2 außerhalb des Lagerregals dargestellte Steuervorrichtung 9 kann selbstverständlich an beliebiger Stelle in den Kommissionierautomaten integriert sein.

## Patentansprüche

1. Arzneimittel-Kommissionierautomat (1) mit
wenigstens einem Lagerregal (2A, 2B),
wenigstens einem sich in einer Gasse (23) vor dem Lagerregal (2A, 2B) bewegenden Regalbediengerät (4) zum Einlagern von Arzneimittelpackungen in Lagerplätze auf Lagerflächen (3) des Lagerregals (2A, 2B) und zum Entnehmen dieser Arzneimittelpackungen von den Lagerflächen (3),
einer Steuervorrichtung (9) zur Steuerung des Regalbediengeräts (4), und
einer Füllvorrichtung zum sukzessiven Befüllen einer Vielzahl von Transportbehältern (14A, B, C) mit jeweils einer einem Auftrag entsprechenden Gruppe mehrerer Arzneimittelpackungen, **dadurch gekennzeichnet, dass** die Füllvorrichtung aufweist:
mehrere ortsfest angeordnete Sammelbehälter (10A, 10B, 10C) mit jeweils einer bodenseitigen Öffnung, wobei die Sammelbehälter jeweils eine einem Auftrag entsprechende Gruppe mehrerer Arzneimittelpackungen aufnehmen können und eine Entladevorrichtung aufweisen, mit deren Hilfe sämtliche in dem Sammelbehälter (10A, 10B, 10C) angesammelte Arzneimittelpackungen gleichzeitig entladen werden können, wobei die Entladevorrichtungen jeweils eine Verschlussvorrichtung (11A, 11B, 11C) zum Verschließen und Freigeben der bodenseitigen Öffnung aufweisen,
erste Transportvorrichtungen (17A, 17B, 17C) mit jeweils einem in die Gasse (23) in den Zugriffsbereich des wenigstens einen Regalbediengeräts (4) hineinreichenden Transportkanal, in den das Regalbediengerät (4) Arzneimittelpackungen abgeben kann und der die Arzneimittelpackungen in einen zugehörigen Sammelbehälter (10A, 10B, 10C) weiterleitet, wobei jedem Sammelbehälter (10A, 10B, 10C) eine erste Transportvorrichtung (17A, 17B, 17C) zugeordnet ist,
zumindest eine zweite Transportvorrichtung (13) zum Aufnehmen der entladenen angesammelten Arzneimittelpackungen der Gruppe aus jeweils einem Sammelbehälter (10A, 10B, 10C) und zum Weiterleiten der entladenen Arzneimittelpackungen der Gruppe in den am Füllort positionierten Transportbehälter (14A) vorgesehen ist, und
eine Vorrichtung zur Aufnahme eines zu füllenden Transportbehälters (14A) an einem Füllort der Füllvorrichtung, wobei der zu füllende Transportbehälter (14A) an dem Füllort derart angeordnet ist, dass die mittels der Entladevorrichtung entladenen Arzneimittelpackungen in den Transportbehälter (14A) geleitet werden,
wobei die wenigstens eine zweite Transportvorrichtung (13) einen trichterartigen Führungskanal mit einer oberen und einer unteren Öffnung umfasst, wobei die obere Öffnung unterhalb der bodenseitigen Öffnungen aller Sammelbehälter (10A, 10B, 10C) und die untere Öffnung über einem am Füllort positionierten, oben offenen Transportbehälter (14A) angeordnet ist.

2. Arzneimittel-Kommissionierautomat nach Anspruch 1, **dadurch gekennzeichnet, dass** die Verschlussvorrichtungen (11A, 11B, 11C) zum Verschließen und Freigeben der bodenseitigen Öffnung jeweils einen Schiebe- oder Rollladen umfassen.

3. Arzneimittel-Kommissionierautomat nach Anspruch 1 oder 2, **dadurch gekennzeichnet, dass** der trichterartige Führungskanal der zweiten Transportvorrichtung (13) eine Sperrvorrichtung derart aufweist, dass die aus einem Sammelbehälter (10A, 10B, 10C) in den Führungskanal entladenen Arzneimittelpackungen einer Gruppe stromauf der Sperrvorrichtung zwischengespeichert und nach einer Freigabe der Sperrvorrichtung weitergeleitet werden können.

4. Arzneimittel-Kommissionierautomat nach Anspruch 3, **dadurch gekennzeichnet, dass** die Sperrvorrichtung einen Schiebe- oder Rollladen zum Verschließen und Freigeben der unteren Öffnung des Führungskanals umfasst.

5. Arzneimittel-Kommissionierautomat nach einem der Ansprüche 1 - 4, **dadurch gekennzeichnet, dass** die Sammelbehälter (10A, 10B, 10C) oben offene Bunker sind.

6. Arzneimittel-Kommissionierautomat nach Anspruch 5, **dadurch gekennzeichnet, dass** der Transportkanal jeder der ersten Transportvorrichtungen (17A, 17B, 17C) von einer Rutsche gebildet ist, auf der die an einem oberen Ende (18A, 18B) von dem Regalbediengerät abgelegten Arzneimittelpackungen schwerkraftgetrieben in den zugehörigen Sammelbehälter (10A, 10B, 10C) rutschen.

7. Arzneimittel-Kommissionierautomat nach Anspruch 6, **dadurch gekennzeichnet,**
**dass** Lagerregale (2A, 2B) parallel zu beiden Längsseiten der Gasse (23) angeordnet sind,
**dass** die oberen Enden (18A, 18B) der Rutschen der ersten Transportvorrichtungen (17A, 17B, 17C) an einer Stirnseite der Gasse (23) angeordnet sind und
**dass** die Sammelbehälter (10A, 10B, 10C) jenseits der Gasse (23) vor einer an der Stirnseite der Gasse angeordneten Stirnwand (24) angeordnet sind.

8. Arzneimittel-Kommissionierautomat nach Anspruch 7, **dadurch gekennzeichnet,**
**dass** zwischen den Lagerflächen (3) eines oder beider parallel zur Gasse (23) angeordneten Lagerregale (2A, 2B) und/oder neben den Lagerregalen (2A, 2B) auf ihrer der Gasse (23) gegenüberliegenden Seite wenigstens ein mit der Steuervorrichtung (9) gekoppeltes Transportband (19) angeordnet ist, wobei das Transportband (19) aufliegende Arzneimittelpackungen über die Stirnwand (24) hinaus transportiert,
**dass** ein oder mehrere Rutschen (20) mit jeweils einem oberen und einem unteren Ende vorgesehen sind, wobei die oberen Enden derart in den Zugriffsbereich des Regalbediengeräts (4) reichen, dass das Regalbediengerät (4) Arzneimittelpackungen in die Rutschen (20) ablegen kann, und wobei die unteren Enden über dem Transportband (19) angeordnet sind, und
**dass** mit der Steuervorrichtung (9) gekoppelte dritte Transportvorrichtungen (21A, 21B, 22) vorgesehen sind, die Arzneimittelpackungen von dem wenigstens einen Transportband (19) aufnehmen und in einen von der Steuervorrichtung (9) ausgewählten Sammelbehälter (10A, 10B, 10C) transportieren können.

9. Arzneimittel-Kommissionierautomat nach einem der Ansprüche 1 - 8, **dadurch gekennzeichnet, dass** die Vorrichtung zur Aufnahme eines zu füllenden Transportbehälters (14A) an dem Füllort der Füllvorrichtung Teil einer Vorrichtung (15) zum sukzessiven Zuführen der zu füllenden Transportbehälter (14A, B, C) zu dem Füllort der Füllvorrichtung ist.

10. Arzneimittel-Kommissionierautomat nach einem der Ansprüche 1 - 9, **dadurch gekennzeichnet, dass** zwei bis sechs Sammelbehälter (10A, 10B, 10C) vorgesehen und benachbart zueinander angeordnet sind.

11. Arzneimittel-Kommissionierautomat nach Anspruch 10, **dadurch gekennzeichnet, dass** zwei oder vier Sammelbehälter (10A, 10B, 10C) vorgesehen und paarweise benachbart zueinander angeordnet sind.

## Claims

1. Pharmaceutical picking machine (1) with
at least one storage rack (2A, 2B),
at least one storage and retrieval device (4) moving in an aisle (23) in front of the storage rack (2A, 2B) for storing drug packages in storage spaces on storage surfaces (3) of the storage rack (2A, 2B) and for removing these drug packages from the storage surfaces (3),
a control device (9) for controlling the storage and retrieval device (4), and
a filling device for successively filling a plurality of transport containers (14A, B, C) each with a group of several drug packages corresponding to one order, **characterized in that** the filling device comprises
a plurality of fixedly arranged collecting containers (10A, 10B, 10C) each having an opening at the bottom, wherein the collecting containers can each receive a group of a plurality of drug packages corresponding to an order and have a discharge device with the aid of which all the drug packages accumulated in the collecting container (10A, 10B, 10C) can be discharged simultaneously, wherein the discharge devices each have a closing device (11A, 11B, 11C) for closing and releasing the opening at the bottom,
first transport devices (17A, 17B, 17C), each having a transport channel which extends into the aisle (23) into the access area of the at least one storage and retrieval device (4), into which the storage and retrieval device (4) can dispense drug packages and which forwards the drug packages into an associated collection container (10A, 10B, 10C), each collection container (10A, 10B, 10C) being assigned a first transport device (17A, 17B, 17C),
at least one second transport device (13) is provided for receiving the unloaded accumulated drug packages of the group from a respective collecting container (10A, 10B, 10C) and for forwarding the unloaded drug packages of the group into the transport container (14A) positioned at the filling location, and
a device for receiving a transport container (14A) to be filled at a filling location of the filling device, the transport container (14A) to be filled being arranged at the filling location in such a way that the packages of medicaments unloaded by means of the unloading device are directed into the transport container (14A),
wherein the at least one second transport device (13) comprises a funnel-like guide channel with an upper and a lower opening, the upper opening being arranged below the bottom openings of all collecting containers (10A, 10B, 10C) and the lower opening being arranged above a transport container (14A) positioned at the filling location and open at the top.

2. Pharmaceutical picking machine according to claim 1, **characterized in that** the closing devices (11A, 11B, 11C) for closing and releasing the bottom opening each comprise a sliding or roller shutter.

3. Pharmaceutical picking machine according to claim 1 or 2, **characterized in that** the funnel-like guide channel of the second transport device (13) has a blocking device in such a way that the drug packages of a group, which have been discharged into the guide channel from a collecting container (10A, 10B, 10C), can be temporarily stored upstream of the blocking device and can be forwarded after the blocking device has been released.

4. Pharmaceutical picking machine according to claim 3, **characterized in that** the locking device comprises a sliding or roller shutter for closing and releasing the lower opening of the guide channel.

5. Pharmaceutical picking machine according to one of claims 1 - 4, **characterized in that** the collecting containers (10A, 10B, 10C) are bunkers which are open at the top.

6. Pharmaceutical picking machine according to claim 5, **characterized in that** the transport channel of each of the first transport devices (17A, 17B, 17C) is formed by a chute on which the pharmaceutical packages deposited at an upper end (18A, 18B) by the storage and retrieval machine slide under the force of gravity into the associated collecting container (10A, 10B, 10C).

7. Pharmaceutical picking machine according to claim 6, **characterized in that**
that storage racks (2A, 2B) are arranged parallel to both longitudinal sides of the aisle (23),
**in that** the upper ends (18A, 18B) of the slides of the first transport devices (17A, 17B, 17C) are arranged at an end face of the aisle (23), and
**in that** the collecting containers (10A, 10B, 10C) are arranged beyond the aisle (23) in front of an end wall (24) arranged at the end face of the aisle.

8. Pharmaceutical picking machine according to claim 7, **characterized in that**
at least one conveyor belt (19) coupled to the control device (9) is arranged between the storage surfaces (3) of one or both storage racks (2A, 2B) arranged parallel to the aisle (23) and/or next to the storage racks (2A, 2B) on their side opposite the aisle (23), the conveyor belt (19) transporting resting pharmaceutical packages beyond the end wall (24),
one or more chutes (20) each having an upper and a lower end are provided, the upper ends extending into the access area of the storage and retrieval device (4) in such a way that the storage and retrieval device (4) can deposit drug packages into the chutes (20), and the lower ends being arranged above the conveyor belt (19), and
third transport devices (21A, 21B, 22) coupled to the control device (9) are provided, which can pick up drug packages from the at least one conveyor belt (19) and transport them into a collection container (10A, 10B, 10C) selected by the control device (9).

9. Pharmaceutical picking machine according to one of claims 1 - 8, **characterized in that** the device for receiving a transport container (14A) to be filled at the filling location of the filling device is part of a device (15) for successively feeding the transport containers (14A, B, C) to be filled to the filling location of the filling device.

10. Pharmaceutical picking machine according to one of claims 1 - 9, **characterized in that** two to six collecting containers (10A, 10B, 10C) are provided and arranged adjacent to one another.

11. Pharmaceutical picking machine according to claim 10, **characterized in that** two or four collecting containers (10A, 10B, 10C) are provided and arranged in pairs adjacent to one another.

## Revendications

1. Appareil automatique de prélèvement de produits pharmaceutique (1) avec
au moins un rayon de stockage (2A, 2B),
au moins un transstockeur (4) se déplaçant dans une allée (23) devant le rayon de stockage (2A, 2B) pour stocker des emballages de médicaments dans des espaces de stockage sur les surfaces de stockage (3) du rayon de stockage (2A, 2B) et pour retirer ces emballages de médicaments des surfaces de stockage (3) ,
un dispositif de contrôle (9) pour la commande du transstockeur (4), et
un dispositif de remplissage pour remplir successivement une pluralité de récipients de transport (14A, B, C) chacun avec un groupe de plusieurs emballages de médicaments correspondant à une commande, **caractérisé en ce que** le dispositif de remplissage comprend
une pluralité de récipients collecteurs (10A, 10B, 10C) disposés de manière fixe et présentant chacun une ouverture au fond, les récipients collecteurs pouvant recevoir chacun un groupe d'une pluralité d'emballages pharmaceutiques correspondant à une commande et présentant un dispositif d'évacuation à l'aide duquel tous les emballages pharmaceutiques accumulés dans le récipient collecteur (10A, 10B, 10C) peuvent être évacués simultanément, les dispositifs d'évacuation présentant chacun un dispositif de fermeture (11A, 11B, 11C) pour fermer et libérer l'ouverture au fond,
des premiers dispositifs de transport (17A, 17B, 17C), qui présentent chacun un canal de transport qui s'étend dans l'allée (23) dans la zone d'accès du au moins transstockeur (4), ceci canal de transport dans lequel le transstockeur (4) peut distribuer des emballages de médicaments et qui transmet les emballages de médicaments dans un récipient collecteur associé (10A, 10B, 10C), un premier dispositif de transport (17A, 17B, 17C) étant associé à chaque récipient de collecte (10A, 10B, 10C),
au moins un deuxième dispositif de transport (13) pour recevoir les emballages de médicaments du groupe, déchargés et accumulés, d'un récipient collecteur respectif (10A, 10B, 10C) et pour acheminer les emballages de médicaments du groupe, déchargés, dans le conteneur de transport (14A) placé au point de remplissage, et
un dispositif de réception d'un conteneur de transport (14A) à remplir sur un lieu de remplissage du dispositif de remplissage, le conteneur de transport (14A) à remplir étant disposé sur le lieu de remplissage telle que les emballages de médicaments déchargés au moyen du dispositif de déchargement sont dirigés dans le conteneur de transport (14A),
le au moins deuxième dispositif de transport (13) comprenant un canal de guidage en forme d'entonnoir avec une ouverture supérieure et une ouverture inférieure, l'ouverture supérieure étant disposée en dessous des ouvertures du côté du fond de tous les récipients collecteurs (10A, 10B, 10C) et l'ouverture inférieure étant disposée au-dessus d'un conteneur de transport (14A) placé au point de remplissage et ouvert en haut.

2. Appareil automatique de prélèvement de produits pharmaceutique selon la revendication 1, **caractérisée en ce que** les dispositifs de fermeture (11A, 11B, 11C) comprennent chacun un volet coulissant ou un volet roulant pour fermer et libérer l'ouverture du côté du sol.

3. Appareil automatique de prélèvement de produits pharmaceutique selon la revendication 1 ou 2, **caractérisée en ce que** le canal de guidage en forme d'entonnoir du deuxième dispositif de transport (13) comprend un dispositif de blocage telle que les emballages pharmaceutiques d'un groupe, qui ont été déchargés dans le canal de guidage à partir d'un récipient collecteur (10A, 10B, 10C), peuvent être stockés temporairement en amont du dispositif de blocage et peuvent être acheminés après que le dispositif de blocage a été libéré.

4. Appareil automatique de prélèvement de produits pharmaceutique selon la revendication 3, **caractérisée en ce que** le dispositif de blocage comprend un volet coulissant ou un volet roulant pour fermer et libérer l'ouverture inférieure du canal de guidage.

5. Appareil automatique de prélèvement de produits pharmaceutique selon l'une des revendications 1 à 4, **caractérisée en ce que** les récipients de collecte (10A, 10B, 10C) sont des trémies ouvertes en haut.

6. Appareil automatique de prélèvement de produits pharmaceutique selon la revendication 5, **caractérisée en ce que** le canal de transport de chacun des premiers dispositifs de transport (17A, 17B, 17C) est formé par une goulotte sur laquelle les emballages pharmaceutiques déposés à une extrémité supérieure (18A, 18B) par le transstockeur glissent, par la force de gravité, dans le récipient de collecte associé (10A, 10B, 10C).

7. Appareil automatique de prélèvement de produits pharmaceutique selon la revendication 6, **caractérisée**
**en ce que** les rayons de stockage (2A, 2B) sont disposés parallèlement aux deux côtés longitudinaux de l'allée (23),
**en ce que** les extrémités supérieures (18A, 18B) des glissières des premiers dispositifs de transport (17A, 17B, 17C) sont disposées sur une face frontale de l'allée (23), et
**en ce que** les récipients collecteurs (10A, 10B, 10C) sont disposés au-delà de l'allée (23) devant une la paroi frontale (24) disposé à l'extrémité de l'allée.

8. Appareil automatique de prélèvement de produits pharmaceutique selon la revendication 7, **caractérisée**
**en ce qu'**au moins une bande transporteuse (19) couplée au dispositif de contrôle (9) est disposée entre les surfaces de stockage (3) d'un ou des deux rayons de stockage (2A, 2B) disposés parallèlement à l'allée (23) et/ou à côté des rayons de stockage (2A, 2B) sur leur côté opposé à l'allée (23), la bande transporteuse (19) transportant les emballages pharmaceutiques au repos au-delà de la paroi frontale (24),
**en ce qu'**il y a une ou plusieurs goulottes (20) ayant chacune une extrémité supérieure et une extrémité inférieure, les extrémités supérieures atteignant la zone d'accès du transstockeur (4) telle que le transstockeur (4) puisse déposer des emballages de médicaments dans les goulottes (20), et les extrémités inférieures étant disposées au-dessus de la bande transporteuse (19), et
**en ce que** des troisièmes dispositifs de transport (21A, 21B, 22) couplés au dispositif de contrôle (9) sont prévus, qui peuvent prélever des emballages de médicaments sur le au moins une bande transporteuse (19) et les transporter dans un récipient collecteur (10A, 10B, 10C) sélectionné par le dispositif de contrôle (9).

9. Appareil automatique de prélèvement de produits pharmaceutique selon l'une des revendications 1 à 8, **caractérisée en ce que** le dispositif de réception d'un conteneur de transport (14A) à remplir sur le lieu de remplissage du dispositif de remplissage fait partie d'un dispositif (15) destiné à amener successivement les conteneurs de transport (14A, B, C) à remplir au lieu de remplissage du dispositif de remplissage.

10. Appareil automatique de prélèvement de produits pharmaceutique selon l'une des revendications 1 à 9, **caractérisée en ce que** deux à six récipients collecteurs (10A, 10B, 10C) sont prévus et disposés les uns à côté des autres.

11. Appareil automatique de prélèvement de produits pharmaceutique selon la revendication 10, **caractérisée en ce que** deux ou quatre récipients de collecte (10A, 10B, 10C) sont prévus et sont disposés par paires l'un à côté de l'autre.
